# EUROPÄISCHE PATENTANMELDUNG

(11) **EP 0 687 510 A1**
(43) Veröffentlichungstag der Anmeldung: **20.12.1995**
(21) Anmeldenummer: 95107294.1
(22) Anmeldetag: 13.05.1995
(51) Int. Cl.: B08B 9/02, G01M 3/00, F16L 55/26, E03F 9/00

(54) **Spül- und Inspektionsvorrichtung für Drainagerohre in Deponien**

(30) Priorität: 17.05.1994 DE 4417265
(71) Anmelder: Trienekens Entsorgung GmbH, D-41747 Viersen (DE)
(72) Erfinder: Jansen, Armin, D-41749 Viersen (DE)
(74) Vertreter: Müller, Karl-Ernst, Dr.

(57) **Zusammenfassung**

Die Erfindung betrifft eine Vorrichtung zum Spülen und/oder mittels einer Kanalkamera durchführbaren optischen Überprüfen von in Abfalldeponien horizontweise eingebrachten und in vertikale, in dem Deponiekörper stehende, aufgrund ihrer Abmessung einer Personenbefahrung unzugängliche Sickerwasserschächte (14) mündenden Drainagerohren (17), bestehend aus einem in dem Sickerwasserschacht verfahrbaren und mittels einer Klemmvorrichtung an der Schachtwandung festsetzbaren Befahrungswagen (19) der eine an ihm gehalterte Kamera zur Ausrichtung des Befahrungswagens zur Eingangsöffnung des Drainagerohres (17) in der Schachtwandung sowie eine auf die Eingangsöffnung ausrichtbare Einführhilfe (23) für einen Spülschlauch oder die Kanalkamera aufweist.

## Beschreibung

Die Erfindung betrifft eine Vorrichtung zum Spülen und/oder mittels einer Kanalkamera durchführbaren optischen Überprüfen von in Abfalldeponien horizontweise eingebrachten und in vertikale, in dem Deponiekörper stehende, aufgrund ihrer Abmessung einer Personenbefahrung unzugängliche Sickerwasserschächte mündenden Drainagerohren.

Derartige Drainagerohre dienen der Sickerwassererfassung auf Deponien, wobei das in den Drainagerohren den in dem Deponiekörper stehenden vertikalen Schächten zufließende Sickerwasser in den Sickerwasserschächten gesammelt beziehungsweise dort gehoben wird. Um die Funktion der Drainagerohre mit der aus Gründen des Umweltschutzes erforderlichen Sicherheit zu gewährleisten, müssen die Drainagerohre in regelmäßigen Abständen durchgespült oder von Zeit zu Zeit auch durch Befahrung mit Hilfe einer an sich bekannten Kanalkamera auf Deformationen, Ablagerungen oder Abrisse an den Übergangsstücken zwischen den einzelnen Rohrabschnitten optisch untersucht beziehungsweise überwacht werden.

Das damit verbundene Problem besteht darin, daß die in den meisten der heute betriebenen Deponien beim Deponieaufbau darin hochgezogenen Sickerwasserschächte schon von ihrem Durchmesser keine Befahrung durch Personen zulassen, die etwa einen Spülschlauch oder eine Kanalkamera in die in die Schächte mündenden Drainagerohre einsetzen könnten; auch steht einer Personenbefahrung bei tieferen Schächten das Risiko der Gasentwicklung entgegen.

Der Erfindung liegt daher die Aufgabe zugrunde, eine Vorrichtung der eingangs genannten Art zur Verfügung zu stellen, mittels der von der Deponieoberfläche aus die erforderlichen Reinigungs- und Überwachungsarbeiten für die Drainagerohre eingeleitet und durchgeführt werden können.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht hierzu einen in dem Sickerwasserschacht verfahrbaren und mittels einer Klemmvorrichtung an der Schachtwandung festsetzbaren Befahrungswagen vor, der eine an ihm gehalterte Kamera zur Ausrichtung des Befahrungswagens zur Eingangsöffnung des zugeordneten Drainagerohres in der Schachtwandung sowie eine auf die Eingangsöffnung ausrichtbare Einführhilfe für einen Spülschlauch oder die Kanalkamera aufweist.

Der Befahrungswagen wird in eine solche Position in dem Sickerwasserschacht gebracht, daß die Einführhilfe zu dem Eingang eines Drainagerohres in der Schachtwandung in eine solche Lage gebracht werden kann, in welcher ein Spülschlauch oder eine Kanalkamera von dem Befahrungswagen aus in das zugeordnete Drainagerohr gebracht werden kann. Mit der Erfindung ist somit der Vorteil verbunden, daß eine Personenbefahrung der Sickerwasserschächte nicht erforderlich ist, um die erforderlichen Reinigungs- und Überwachungsmaßnahmen durchzuführen.

Nach einem Ausführungsbeispiel der Erfindung ist vorgesehen, daß an der in den Schacht reichenden Unterseite des Befahrungswagens ein Umlenkblock für eine 90 Grad-Umlenkung des Spülschlauches angeordnet ist, wobei zweckmäßig am Ausgang eines in dem Umlenkblock gebildeten Umlenkkanals als Einführhilfe für den Spülschlauch eine Spüldüsenhalterung angeordnet ist. Zur Positionierung der Spüldüsenhalterung zur Eingangsöffnung des Drainagerohres in der Schachtwandung ist die Kamera an dem Umlenkblock gehaltert und auf die Stellung der Spüldüsenhalterung zur Schachtwandung ausgerichtet. Damit ist es möglich, den Befahrungswagen in dem Sickerwasserschacht genau in die Position zu bringen, in welcher die Spüldüsenhalterung und die Eingangsöffnung des zu reinigenden Drainagerohres miteinander fluchten.

Soweit die Drainageleitung mittels einer Kanalkamera inspiziert werden soll, sieht die Erfindung vor, daß an der in den Schacht reichenden Unterseite des Befahrungswagens eine Plattform zur Aufstellung der Kanalkamera angeordnet ist; diese Plattform weist nach einem Vorschlag der Erfindung eine ausfahrbare Schiene zur Überbrückung des Abstandes zwischen der Plattform und der Schachtwandung auf, so daß die selbstfahrende Kanalkamera nach Ausrichtung der Plattform die Plattform verlassen und in das zugeordnete Drainagerohr einfahren kann.

Zur Optimierung der Ausrichtmöglichkeit kann vorgesehen sein, daß Umlenkblock oder Plattform drehbar an dem Befahrungswagen angeordnet sind, wobei zweckmäßig in dem Befahrungswagen eine Drehachse mit einem zugeordneten Antrieb zur drehbaren Halterung von Umlenkblock oder Plattform angeordnet ist.

In der Zeichnung sind Ausführungsbeispiele der Erfindung wiedergegeben, welche nachstehend beschrieben sind. Es zeigen:
- Fig. 1: einen Deponiekörper mit Sickerwasserschacht, Drainagerohr und Befahrungswagen mit Umlenkblock;
- Fig. 1a: in einem Ausschnitt aus Figur 1 den Befahrungswagen mit Plattform;
- Fig. 2: den Umlenkblock in einer Einzeldarstellung,
- Fig. 3: die Plattform in einer Einzeldarstellung.

In einem zwischen einer Basisabdichtung 11 und einer Rekultivierungsschicht 12 hochgezogenen Deponiekörper 10 steht ein vertikaler Sickerwasserschacht 13 mit einer zugehörigen Schachtwandung 14 auf einem Schachtfundament 15. Auf der Basisabdichtung 11 liegt ein Drainagerohr 16, welches mit einer Eingangsöffnung 17 in die Schachtwandung 14 mündet. Bei dem dargestellten Sickerwasserschacht 13 handelt es sich nicht um einen Förderschacht, sondern um einen Sammelschacht, von dem eine Ablaufleitung 18 zur Ableitung des Sickerwassers abgeht.

In dem Sickerwasserschacht 13 ist ein Befahrungswagen 19 an einem Seil 20 hängend verfahrbar angeordnet, der aus einer Rohrkonstruktion besteht und über jeweils in zueinander um 120 Grad versetzt angeordneten Ebenen zwei federnd gelagerte luftbereifte Räder 35 an der Schachtwandung 14 abgestützt ist. Der Befahrungswagen 19 weist eine nicht weiter dargestellte, beispielsweise pneumatisch betätigte Klemmvorrichtung auf, mittels der der Befahrungswagen 19 in dem Sickerwasserschacht 13 jeder beliebigen Stellung festlegbar ist.

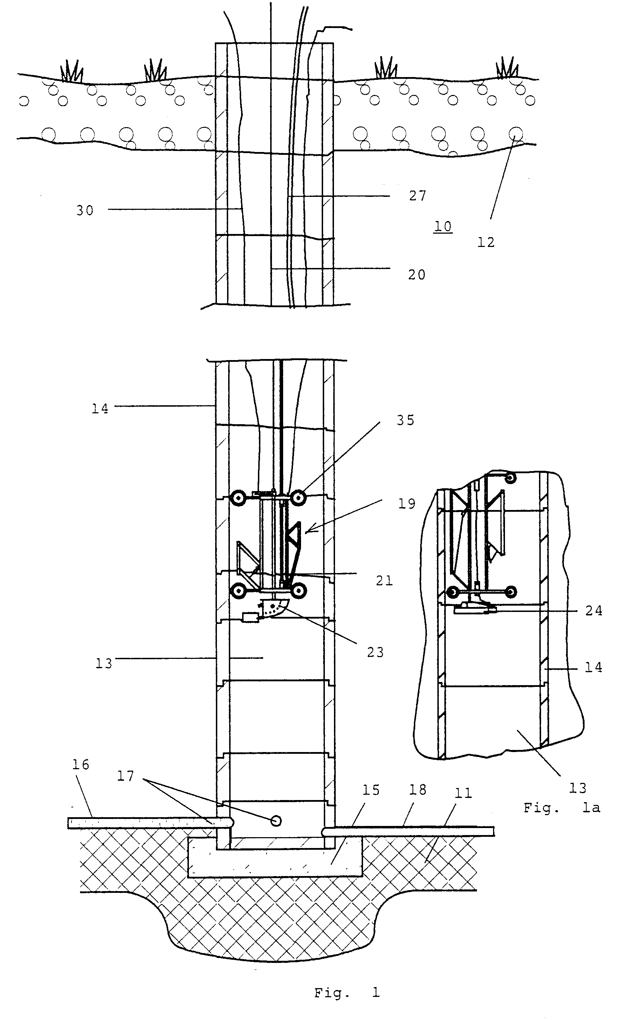

In dem Befahrungswagen 19 ist eine Drehachse 21 mit einem zugeordneten Antrieb angeordnet, an deren unteren Ende über einen Befestigungsbolzen 22 ein Umlenkblock 23 (Fig. 1) beziehungsweise eine Plattform 24 (Fig. 1a) gehaltert ist; der Drehwinkel der Drehachse beträgt beispielsweise 270 Grad, kann sich aber über jeden beliebigen Winkelbereich erstrecken.

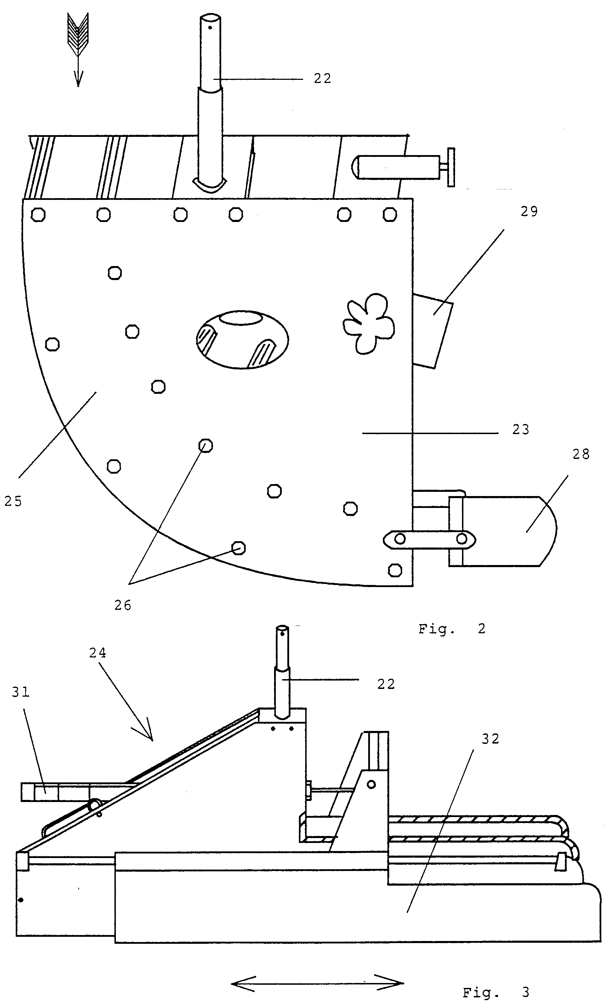

Wie sich aus Figur 2 entnehmen läßt, ist in dem Umlenkblock 23 ein Umlenkkanal 25 mit diesen begrenzenden beziehungsweise einfassenden Umkehrrollen 26 ausgebildet, mittels der ein von der Schachtmündung über den Befahrungswagen 19 herangeführter Hochdruck-Spülschlauch 27 von der Vertikalen in die Horizontale umgelenkt wird. Am horizontalen Ausgang des Umlenkkanals 25 ist eine Spüldüsenhalterung 28 angeordnet, in welche eine am vorderen Ende des Hochdruck-Spülschlauches 27 befindliche Spüldüse einlegbar ist. Oberhalb der Spüldüsenhalterung 28 ist an dem Umlenkblock 23 eine Kamera 29 angeordnet, die auf die Stellung der Spüldüsenhalterung 28 zur Schachtwandung 14 derart ausgerichtet ist, daß die Eingangsöffnung 17 des zu inspizierenden Drainagerohres 16 in Beziehung zur Spüldüsenhalterung 28 sichtbar ist. Ein Kamerakabel 29 führt dabei über den Befahrungswagen 19 zur Deponieoberfläche.

Soll nun das Drainagerohr 16 mittels des Hochdruck-Spülschlauches 27 durchgespült werden, so wird der Spülschlauch 27 mit seinem vorderen Ende in den Umlenkkanal 25 des an dem Befahrungswagen 19 gehalterten Umlenkblockes 23 eingeschoben, und die zugehörige Spüldüse wird in der Spüldüsenhalterung 28 festgelegt. Anschließend wird der Befahrungswagen 19 an dem Seil 20 in den Schacht hinabgelassen, wobei die Stellung des Befahrungswagens 19 durch die Kamera 29 überwacht werden kann, bis der Befahrungswagen 19 die richtige Höhenposition in dem Sickerwasserschacht 13 erreicht hat. Durch Drehung der Drehachse kann nun mittels der Kamera 29 die genaue Positionierung der Spüldüsenhalterung 28 zur Eingangsöffnung 17 des Drainagerohres 16 vorgenommen werden, so daß die Teile miteinander fluchten. Durch Beaufschlagung des Hochdruck-Spülschlauches 27 fährt dieser aus der Spüldüsenhalterung 28 hinaus und in das Drainagerohr 16 ein, wonach sich der Hochdruckspülschlauch in einer bekannten Weise selbstätig durch die Drainageleitung vorschiebt und diese dabei reinigt. In gleicher Weise kann nach Beendigung des Reinigungsvorganges der Hochdruck-Spülschlauch 27 wieder gezogen werden, bis die Spüldüse in die Spüldüsenhalterung 28 einrastet, wonach der Befahrungswagen 19 wieder an die Deponieoberfläche gezogen werden kann.

In Figur 3 ist ein Ausführungsbeispiel dargestellt, bei welchem der Befahrungswagen 19 dazu dient, eine an sich bekannte selbstfahrende Kanalkamera in das zugeordnete Drainagerohr 16 einzubringen; hierzu ist am unteren Ende des Befahrungswagens 19 nun eine Plattform 24 angeordnet, auf der die Kanalkamera aufgestellt wird; da die Kanalkamera die für die Positionierung des Befahrungswagens 19 erforderlichen Bilder unmittelbar liefert, ist eine der Kamera 29 bei dem Ausführungsbeispiel gemäß Figur 2 entsprechende weitere Kamera nicht erforderlich. Zur Überbrückung des Abstandes zwischen der Plattform 24 und der Schachtwandung 14 weist die Plattform 24 eine über einen Pneumatikzylinder 31 verfahrbare Schiene 32 auf, so daß die auf der Plattform 24 beziehungsweise der Schiene 31 stehende Kanalkamera in das Drainagerohr 16 einfahren und letzteres auf demselben Wege wieder verlassen kann.

In gleicher Weise wie zu dem Ausführungsbeispiel gemäß Figur 2 beschrieben wird auch bei der diesbezüglichen optischen Inspektion des Drainagerohres 16 der Befahrungswagen 19 in den Sickerwasserschacht 13 hinabgelassen und mittels Drehung der Plattform 24 in die erforderliche Position gebracht und dort festgeklemmt, in welcher die Plattform 24 und die Eingangsöffnung 17 des zugeordneten Drainagerohres 16 miteinander fluchten; durch Betätigung des Pneumatikzylinders 31 wird die Schiene 32 bis zur Anlage an der Schachtwandung 14 ausgefahren, so daß die Kanalkamera den Abstand zwischen Plattform 24 und Schachtwandung 14 überbrücken und in das Drainagerohr 16 einfahren kann.

Wie der vorstehenden Beschreibung zu entnehmen ist, können sämtliche Funktionen der Vorrichtungen von der Deponieoberfläche aus gesteuert werden, wobei die gesamte Vorrichtung einfach zu transportieren und zu handhaben ist und an dem Schacht selbst keinerlei Installationen erforderlich sind. Damit zeichnet sich die Erfindung durch eine besonders wirtschaftliche Handhabung aus, wobei auch eine Anpassung der Konstruktion auf unterschiedliche Schachtdurchmesser in einfacher Weise möglich ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Vorrichtung zum Spülen und/oder mittels einer Kanalkamera durchführbaren optischen Überprüfen von in Abfalldeponien horizontweise eingebrachten und in vertikale, in dem Deponiekörper (10) stehende, aufgrund ihrer Abmessung einer Personenbefahrung unzugängliche Sickerwasserschächte (13) mündenden Drainagerohren (16), bestehend aus einem in dem Sickerwasserschacht (13) verfahrbaren und mittels einer Klemmvorrichtung an der Schachtwandung (14) festsetzbaren Befahrungswagen (19) der eine an ihm gehalterte Kamera (29) zur Ausrichtung des Befahrungswagens (19) zur Eingangsöffnung (17) des Drainagerohres (16) in der Schachtwandung (14) sowie eine auf die Eingangsöffnung (17) ausrichtbare Einführhilfe (23, 24) für einen Spülschlauch (27) oder die Kanalkamera aufweist.

2. Vorrichtung nach Anspruch 1, dadurch gekennzeichnet, daß an der in den Schacht (13) reichenden Unterseite des Befahrungswagens (19) ein Umlenkblock (23) für eine 90 Grad-Umlenkung des Spülschlauches (27) angeordnet ist.

3. Vorrichtung nach Anspruch 2, dadurch gekennzeichnet, daß am Ausgang eines in dem Umlenkblock (23) gebildeten Umlenkkanals (25) als Einführhilfe für den Spülschlauch (27) eine Spüldüsenhalterung (28) angeordnet ist.

4. Vorrichtung nach einem der Ansprüche 1 bis 3, dadurch gekennzeichnet, daß die Kamera (29) an dem Umlenkblock (23) gehaltert und auf die Stellung der Spüldüsenhalterung (28) zur Schachtwandung (14) ausgerichtet ist.

5. Vorrichtung nach Anspruch 1, dadurch gekennzeichnet, daß an der in den Schacht (13) reichenden Unterseite des Befahrungswagens (19) eine Plattform (24) zur Aufstellung der Kanalkamera angeordnet ist.

6. Vorrichtung nach Anspruch 5, dadurch gekennzeichnet, daß die Plattform (24) eine ausfahrbare Schiene (32) zur Überbrückung des Abstandes zwischen der Plattform (24) und der Schachtwandung (14) aufweist.

7. Vorrichtung nach einem der Ansprüche 1 bis 6, dadurch gekennzeichnet, daß Umlenkblock (23) oder Plattform (24) drehbar an dem Befahrungswagen (19) angeordnet sind.

8. Vorrichtung nach Anspruch 7, dadurch gekennzeichnet, daß in dem Befahrungswagen (19) eine Drehachse mit einem Antriebsmotor zur drehbaren Halterung von Umlenkblock (23) oder Plattform (24) angeordnet ist.
